# EUROPÄISCHE PATENTSCHRIFT

(11) **EP 3 748 255 B1**
(45) Veröffentlichungstag und Bekanntmachung des Hinweises auf die Patenterteilung: **02.10.2024**
(21) Anmeldenummer: 20172966.2
(22) Anmeldetag: 05.05.2020
(51) Int. Cl.: F25B 1/00, F25B 49/02

(54) **KOMPRESSOR-LÜFTER-MANAGEMENT**
COMPRESSOR VENTILATION MANAGEMENT
GESTION D'UN AÉRATEUR COMPRESSEUR

(30) Priorität: 03.06.2019 DE 102019114739
(43) Veröffentlichungstag der Anmeldung: 09.12.2020
(73) Patentinhaber: Vaillant GmbH, 42859 Remscheid (DE)
(72) Erfinder: Ceylan, Özgür, 42277 Wuppertal (DE); Veiser, Andreas, 40627 Düsseldorf (DE); Wahl, Tim, 42107 Wuppertal (DE); Jahr, Norbert, 42897 Remscheid (DE)
(74) Vertreter: Popp, Carsten

(56) Entgegenhaltungen:
- CH-A1- 710 088
- DE-A1- 102011 006 258
- GB-A- 2 557 826

## Beschreibung

Die Erfindung betrifft eine Regelung und Steuerung von Wärmepumpen, die der Umgebungsluft Wärme entnehmen oder diese an sie abgeben, und die außerhalb von Gebäuden aufgestellt sind. Der Begriff der Wärmepumpe wird hierbei umfassend für Geräte verwendet, in denen ein linksdrehender Clausius-Rankine-Kreisprozess ablaufen soll, wobei entweder Nutzwärme oder Nutzkälte oder beides gleichzeitig erzeugt wird. Auch kann eine solche Wärmepumpe gestuft ausgeführt sein, um Heizwärme bei einem niedrigen Temperaturniveau, z.B. bei 28 Grad Celsius für eine Fußbodenheizung, und Brauchwasser bei einem höheren Temperaturniveau, z.B. bei 70 Grad Celsius bereitzustellen. Hierbei entzieht die Wärmepumpe einem kälteren Medium Wärme und transformiert sie mittels elektrischer Energie auf ein höheres Temperaturniveau.

Beim Entzug dieser Wärme kann jeweils auch Kälte erzeugt werden. Auch die Kälte kann bei verschiedenen Temperaturen benötigt werden, für die Klimatisierung beispielsweise bei 14 Grad Celsius und für die Lebensmittelkühlung auch 4 Grad Celsius oder für Gefrieranwendungen noch tiefer. In manchen Bauarten kann zwischen Heizbetrieb und Klimatisierung umgeschaltet, in anderen können beide Betriebsarten parallel betrieben werden.

Derartige Wärmepumpen besitzen mindestens einen geregelten Kompressor bzw. Verdichter, mindestens ein geregeltes elektronisches Expansionsventil, mindestens einen Kondensator und mindestens einen Verdampfer. Sofern mehrere Temperaturstufen bedient werden sollen, können auch gestufte Kompressoren zum Einsatz kommen. In der Regel sind diese Kompressoren drehzahlgeregelt, wobei die Regelung der Drehzahl entsprechend der abgenommenen Nutzwärme des Heizkreislaufs oder der Kälteerzeugung im Klimatisierungsbetrieb erfolgt.

Die Regelung des geregelten elektronischen Expansionsventils erfolgt beispielsweise anhand der gewünschten Überhitzung des Arbeitsfluids am Ausgang des Verdampfers. Die Wärme, die im Heizkreislauf aus dem Kondensator entnommen wird, entspricht dabei der Wärme, die im Verdampfer aus der Umwelt entnommen wird zuzüglich der Energie, die dem Arbeitsfluid durch den Kompressor zugeführt wird, sofern die Wärmepumpe als Heizung betrieben wird.

Die Entnahme oder Abgabe von Wärmeenergie an die Außenluft kann dabei auf unterschiedliche Weise erfolgen, wobei in der Regel ein Lüfter zum Einsatz kommt, der ebenso wie der Kompressor drehzahlgeregelt ist. Im Heizbetrieb wird dabei der Verdampfer von Umgebungsluft durchströmt, im Klimatisierungsbetrieb der Kondensator. Es können je nach Bauart auch Wärmeträgerfluide zwischen den Arbeitsfluidumlauf und die Wärmeaufnahmestelle aus der Umwelt bzw. die Wärmeabgabestelle in die Umwelt die Aufgabe des Wärmetransports übernehmen, wenn größere Distanzen zu überwinden sind oder gefährliche Arbeitsfluide zum Einsatz kommen, die einer gesondert gesicherten Abschirmung bedürfen. Typische Wärmeträgerfluide sind Salzsole und Wasser, als Arbeitsfluide wurden in der Vergangenheit fluorierte Kohlenwasserstoffe, sogenannte Sicherheitskältemittel verwendet, die inzwischen durch Propan, Ammoniak und andere Arbeitsfluide ersetzt werden.

Da diese Flüssigkeiten aber über Wärmetauscherflächen schwingungstechnisch miteinander verbunden sind, übertragen sich die Schwingungen des Kompressors üblicherweise auf das gesamte System und regen es zu Schwingungen in der Frequenz der Drehzahl des Kompressors an. Diese Schwingungen des Kompressors werden somit auf den Wärmetauscher übertragen, der mit Umgebungsluft angeströmt wird.

Die Kompressorschwingungen und der dabei entstehende Lärm ist bei Wärmepumpen vor allem aus dem Bereich der Haushalts-Wärmepumpentrockner bekannt. So beschreibt die EP 2 628 838 B1 ein Haushaltsgerät mit einer Trocknungseinrichtung, wie Wäschetrockner, Waschtrockner oder Geschirrspülmaschine, wobei die Trocknung durch oder mit Unterstützung einer Wärmepumpe erfolgt, welche einen Rotationskompressor, insbesondere einen Rollkolbenkompressor beinhaltet, wobei der Kompressor einen wenigstens annähernd hohlzylindrischen Stator umfasst, der auf einer Grundplatte befestigt ist, welche über elastische Fußelemente an dem Haushaltgerät fixiert ist. Dem Kompressor wird als Schwingungstilger mindestens eine schwingfähige Masse zugeordnet, deren Eigenfrequenz auf die vom Kompressor erzeugten Drehschwingungen abgestimmt ist und die an mindestens einem der Fußelemente angeordnet ist.

Durch diese Schwingungstilgung werden zwar die Übertragung von Schwingungen des Kompressors auf das Gehäuse verringert, was den innerhäuslichen Lärm reduziert, die Schwingungen auf das Arbeitsfluid werden jedoch kaum unterbunden.

Die im Außenbereich aufgestellten Lüfter sind üblicherweise Axialventilatoren mit Schaufelblättern, deren Drehzahl geregelt werden kann, in Sonderfällen werden verstellbare Schaufeln verwendet. Die Erfindung bevorzugt solche drehzahlgeregelten Axialventilatoren mit drei Schaufelblättern, wobei jedoch alle anderen Bauformen, wie Radialventilatoren, Querstrom- oder Tangentialventilatoren, ebenfalls verwendet werden können. Durch die Schaufeln bzw. Schaufelblätter entstehen während der Luftförderung Wirbel, die beim Auftreffen auf die Außengitter ebenfalls Schwingungen verursachen, sofern die Wärmetauscher saugseitig angeordnet sind.

Das physikalische Phänomen ist als Blattfolgefrequenz bekannt, Geräte und Detektoren, die diese Blattfolgefrequenz nutzen, werden in der Turbinentechnik verwendet. So beschreibt beispielsweise die DE 10 2009 039 693 A1 ein Verfahren zur Detektion einer Veränderung der aerodynamischen Anströmverhältnisse der im Betrieb einer Turbine rotierenden Turbinenschaufeln, bei dem das Betriebsgeräusch der Turbine erfasst und gemessen wird und dann aus Amplitude und/oder Phase der Werte Schlüsse gezogen werden.

Die CH 710 088 A1 beschreibt ein Kühlgerät mit drehzahlgesteuertem Kompressor und ebensolchem Lüfter. Die Drehfrequenzen können durch die Steuerung so eingestellt werden, dass zwischen einem geräuschreduzierten Betrieb und einem Normalbetrieb gewählt werden kann.

Die GB 2557826 A beschreibt eine Vorrichtung mit einer Wärmepumpe, die über einen Kompressor und einen Lüfter verfügt, und deren Geräusch durch Regelung von Lüfter oder Kompressor oder beiden im Bedarfsfall verringert werden soll. Hierzu werden zwei Geräuschlevel miteinander verknüpft, die vom Kompressor und vom Lüfter aufgenommen worden und in einer Datenbank gespeichert sind. Die Regelung erfolgt anhand der Temperaturmessungen im Kreislauf der Wärmepumpe und im Außenbereich über die Drehzahlen von Lüfter und Kompressor. Anhand der bekannten Geräuschemission kann die Summe der beiden Geräuschquellen bestimmt werden, wobei sowohl für den Kompressor als auch für den Lüfter je ein Drehzahlbereich für den Normalbetrieb und für den geräuschreduzierten Betrieb vorgesehen ist. Ziel ist dabei, dass der Geräuschlevel von Kompressor und Lüfter jeweils gleich sein sollen, da dann ein Gesamtminimum erreicht werde. Es ist jedoch nicht vorgesehen, die Drehfrequenzen oder Vielfache davon von Lüfter und Kompressor aufeinander abzustimmen oder die Blattanzahl des Lüfters mit einzubeziehen. Außerdem offenbart die GB 2 557 826 A ein Verfahren gemäß dem Oberbegriff des Anspruchs 1.

Die DE 10 2011 006 258 A1 beschreibt ein Haushaltskältegerät mit einem gesteuerten Kompressor und einem gesteuerten Lüfter, bei dem Resonanzen beim Durchlaufen von Drehzahlbereichen vor allem beim Umschalten zwischen stationärem Werten oder beim Starten vermieden werden sollen. Hierzu werden zunächst die Umgebungstemperaturen und die Nutzerwünsche aufgenommen, wobei der Nutzer zwischen einem geräuschreduzierten Betrieb oder dem Normalbetrieb auswählen kann bzw. muss. Der geräuschreduzierte Betrieb wird hierbei durch Drehzahlwerte für Kompressor und Lüfter eingestellt, die Einstellungen erfolgen nicht über eine Regelung, sondern durch eine Steuerung, in welcher geeignete Drehzahlwerte voreingestellt sind.

Im vorliegenden Fall besteht das Problem darin, dass die Blattfolgefrequenz des verwendeten Lüfters und die Schwingungen des Kompressors bei bestimmten Drehzahlen miteinander wechselwirken und sich dabei je nach Phase erheblich verstärken. Diese Wechselwirkung tritt in Form von starker Geräuschentwicklung in Erscheinung, was praktisch bedeutet, dass der Außenbetrieb der Wärmepumpe bei bestimmten Konstellationen die zulässigen Lärm-Grenzwerte überschreitet und die Wärmepumpe dann abzuschalten wäre. Erstaunlicherweise konnte hierbei weder ein Zusammenhang mit der Phase beobachtet werden, was ja außer einer Verstärkung auch eine gegenseitige Auslöschung zur Folge hätte haben können, noch ein Zusammenhang mit den Eigenfrequenzen des gekoppelten Systems. Dies könnte an den tiefen Frequenzen unterhalb von 300 Hertz liegen, da die Quellen in der Wärmepumpe bezogen auf die Wellenlängen und Laufzeiten sehr nah beieinander liegen.

Die Aufgabe der Erfindung ist daher, diese Geräuschentwicklung auf wirtschaftliche Weise sicher zu unterbinden, ohne dass dabei Leistungseinbußen in Kauf genommen werden müssen.

Die Erfindung löst diese Aufgabe mittels eines Verfahrens gemäß Anspruch 1 zur Regelung einer Wärmepumpe, in der ein linksdrehender thermodynamischer Clausius-Rankine-Kreisprozess betrieben und in welchem ein Arbeitsfluid in einem geschlossenen, hermetisch dichten Arbeitsfluidumlauf geführt wird, wobei die Wärmepumpe jeweils mindestens einen drehzahlgeregelten Kompressor, mindestens ein elektronisch geregeltes Expansionsventil, mindestens einen Kondensator, mindestens einen Verdampfer und mindestens einen drehzahlgeregelten Lüfter aufweist, wobei Nutzwärme an mindestens einen Heizkreislauf oder Nutzkälte an mindestens einen Kühlkreislauf abgegeben wird , und wobei
- durch die Wärmepumpenregelung sowohl die Kompressordrehzahlen als auch die Lüfterdrehzahlen erfasst werden,
- aus jeder Lüfterdrehzahl die Blattfolgefrequenz und ihre ganzzahligen Vielfachen gebildet wird,
- diese Blattfolgefrequenz und ihre ganzzahligen Vielfachen mit jeder Kompressordrehzahl und ihren ganzzahligen Vielfachen verglichen wird,
- und die Regelung einen vorgebbaren Frequenzabstand aufweist, der die verglichenen ganzzahligen Vielfachen der Kompressordrehzahlen und die der Blattfolgefrequenz um diesen vorgebbaren Frequenzabstand voneinander entfernt geregelt hält,
- indem entweder die Drehzahl der Kompressoren oder die Drehzahlen der Lüfter oder beide durch Regeleingriff geändert werden.

Durch diese Maßnahme wird erreicht, dass sich das Geräusch an jedem belüfteten Wärmetauscher erheblich verringert, wobei belüftet bedeutet, dass er von einem Lüfter angeströmt oder durchströmt wird, unbeachtlich davon, ob der Lüfter saugseitig oder druckseitig angeordnet ist.

Die Einstellungen der Regelung werden dabei vorher vorgenommen, sie müssen für jedes Baumuster nur einmal erfolgen. Im laufenden Betrieb sind keine Messungen mehr nötig, was ein Vorteil der Erfindung ist. Vorab werden dabei alle möglichen Kombinationen zwischen Kompressordrehzahl und dem Produkt aus Lüfterdrehzahl und Anzahl der Blattschaufeln sowie der jeweiligen harmonischen Vielfachen daraufhin geprüft, inwieweit sie negativen Einfluss auf die Akustik haben. Diese ermittelten Kombinationen werden in der Reglersoftware hinterlegt, damit solche Kombinationen nicht zugelassen bzw. angefahren werden. Hierbei werden auch die spezifischen Drehzahl-Abstände ermittelt, die für jede der ermittelten Kombinationen individuell vorgegeben werden. Die Geräuschminderung wird durch die Reduktion der Amplituden und damit auch der Tonalität erzielt.

In Ausgestaltungen der Erfindung wird vorgesehen, dass die Geräuschminderung des Nachts höher als die am Tag gewählt wird, indem der vorgegebene Frequenzabstand unterschiedlich gewählt wird. Weitere bevorzugte Ausgestaltungen betreffen die zu wählenden Frequenzabstände. In einer bevorzugten Ausgestaltung beträgt er nachts mindestens 2 Prozent, besonders bevorzugt mindestens 5 Prozent, und tags mindestens 1 Prozent, besonders bevorzugt 3 Prozent.

In weiteren Ausgestaltungen der Erfindung wird vorgesehen, dass die Geräuschminderung durch Regelung des Frequenzabstands in Abhängigkeit der Gebietskartierung erfolgt. Hierbei wird berücksichtigt, ob es sich um ein Wohngebiet, ein Gewerbegebiet oder ein Mischgebiet handelt. Selbstverständlich kann diese Berücksichtigung auch kombiniert mit der tageszeitlichen Regelung verknüpft werden.

Bei einer Verringerung der Lüfterdrehzahl muss die Temperaturdifferenz im Wärmetauscher entsprechend angehoben werden, damit dieselbe Wärmemenge übertragen werden kann. Dies geschieht durch eine Erhöhung der geregelten Überhitzung am Ausgang des Verdampfers durch entsprechende Regelung des elektronischen Expansionsventils, wenn der angeströmte Wärmetauscher im Heizbetrieb als Verdampfer betrieben wird, und als Erhöhung der geregelten Unterkühlung, wenn der angeströmte Wärmetauscher im Klimatisierungsbetrieb als Kondensator betrieben wird. Durch die höhere Temperaturdifferenz erhöht sich die Kompressordrehzahl, während die Lüfterdrehzahl verringert wird. Diese beiden Maßnahmen heben sich bezüglich des Gesamtenergiebedarfs weitgehend gegenseitig auf.

Die Erfindung wird anhand der Figuren 1 bis 3 näher erläutert. Dabei zeigen:
- Fig. 1 eine schematische Darstellung eines linksdrehenden Kälteprozesses für ein einfaches Luft/Wasser-Wärmepumpensystem,
- Fig. 2 die Geräuschentwicklung über einen Frequenzbereich mit Bezug zur Blattfolgefrequenz und zur Lüfterdrehzahl,
- Fig. 3 die Geräuschentwicklung über einen Frequenzbereich mit Bezug zur Kompressordrehzahl.

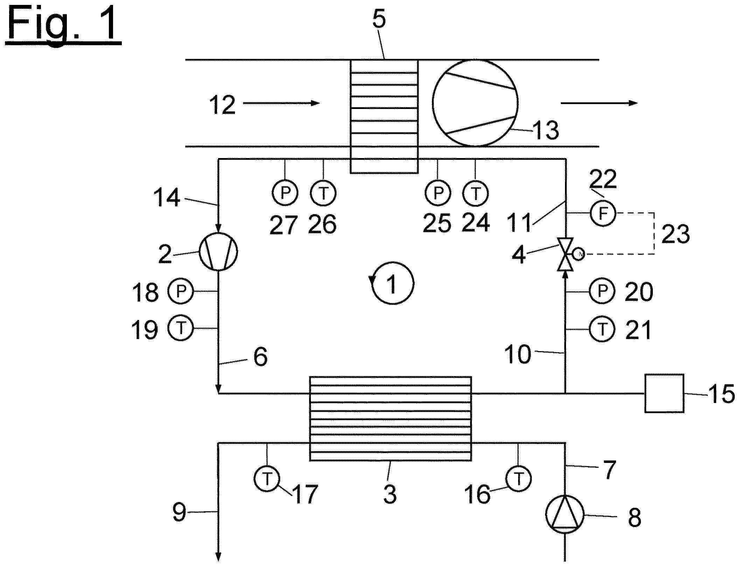

Fig. 1 zeigt in diesem Beispiel einen Kältekreislauf 1 mit einem Kältekompressor 2, einem Kondensator 3, einem Entspannungs-Regelventil 4 und einem Verdampfer 5. Hierbei strömt verdichtetes Arbeitsfluid 6 zum Kondensator 3, wo es seine Wärme an den Wärmeträgerstrom 7 abgibt, der von der Umwälzpumpe 8 als Wärmestrom 9 zum Verbraucher gefördert wird. Das hierdurch abgekühlte und kondensierte Arbeitsfluid 10 gelangt zum Entspannungs-Regelventil 4, wobei es sich weiter abkühlt und als Kältestrom 11 in den Verdampfer 5 geleitet wird. Dort nimmt es Wärme der Umgebungsluft 12, die vom Lüfter 13 durch den Verdampfer 5 gesogen wird, auf. Das erwärmte Arbeitsfluid 14 wird wieder von Kältekompressor 2 verdichtet, womit der Kältekreislauf 1 geschlossen ist. Hinter dem Kondensator 3 ist ein Sammelbehälter 15 angeordnet.

Der Wärmeträgerstrom 7 ist hier der Rücklauf aus dem Heizkreislauf, der Wärmestrom 9 der Vorlauf in den Heizkreislauf. Die Fördermenge der Umwälzpumpe 8 ist aus den Kennlinien in Abhängigkeit der Drehzahl gut bekannt, der Temperaturunterschied zwischen Vorlauf und Rücklauf wird von den Temperaturmessstellen 16 und 17 gemessen und an eine zentrale Steuereinheit gemeldet. Daraus wird der Wärmebedarf ermittelt, der als Führungsgröße für die Kompressorförderleistung dient, speziell für die Drehzahl des Antriebs des Kältekompressors 2.

Am Ausgang des Kältekompressors 2 werden Druck 18 und Temperatur 19 gemessen, um die Enthalpie des verdichteten Arbeitsfluids zu bestimmen, das verdichtete Arbeitsfluid 6 ist vollständig dampfförmig und überhitzt. Am Ausgang des nachfolgenden Kondensators 3 ist das Arbeitsfluid 10 vollständig kondensiert und unterkühlt, Druck 20 und Temperatur 21 werden auch dort gemessen, um die Enthalpie zu bestimmen. Aus der Enthalpiedifferenz wird die Fördermenge, die der Kältekompressor 2 liefern muss, um den Wärmebedarf durch den Heizkreislauf zu decken, genau bestimmt und damit die Drehzahl des Kompressorantriebs geregelt.

An dieser Stelle setzt auch die Erfindung ein, bei der diese Drehzahl des Kompressorantriebs etwas angehoben wird, sobald Drehzahlkombinationen erreicht werden, die in der Regelung als unzulässig vorgegeben sind. Diese Drehzahlanhebung ist dabei sehr gering und liegt in der Größenordnung von wenigen Prozent.

Damit könnte im Grundsatz auch eine etwas höhere Wärmeabgabeleistung erreicht werden. Dies wird aber nicht angestrebt, stattdessen wird die Lüfterdrehzahl einige Prozent herabgeregelt. Hierdurch wird der Umgebungsluft 12 zunächst weniger Wärme entzogen. Die Regelung reagiert darauf, indem sie die Verdampfungstemperatur, die an der Temperaturmessstelle 24 gemessen wird, entsprechend leicht absenkt und somit den Druck, der an der Druckmessstelle 25 gemessen wird, auf den das elektronische Expansionsventil 4 hin entspannt. Die Erhöhung der Kompressordrehzahl bedeutet somit, dass das Arbeitsfluid von einem niedrigeren Druck, gemessen an der Druckmessstelle 27 aus zu verdichten ist. Die Drehzahlerhöhung des Kompressors 2 wirkt also praktisch nur saugseitig.

Während dieses Regelvorgangs muss die Menge des Arbeitsfluids, welches durch den Kompressor 2 gefördert wird, und die, die vom elektronischen Expansionsventil 4 übereinstimmen. Hierzu wird der Massenstrom 22 durch das elektronische Expansionsventil 4 entweder gemessen und im Regelkreis 23 geregelt, oder es findet eine großzügige Überhitzungsregelung des Verdampfers statt, der zu einem automatischen Abgleich der Massenströme führt. Damit das elektronische Expansions-Regelventil 4 auch bei dynamischen Änderungen den erforderlichen Regelungsfreiheitsgrad bekommt, befindet sich zwischen Kondensator und elektronischem Expansionsventil 4 der Sammelbehälter 15, der auch als Ausgleichsbehälter dient.

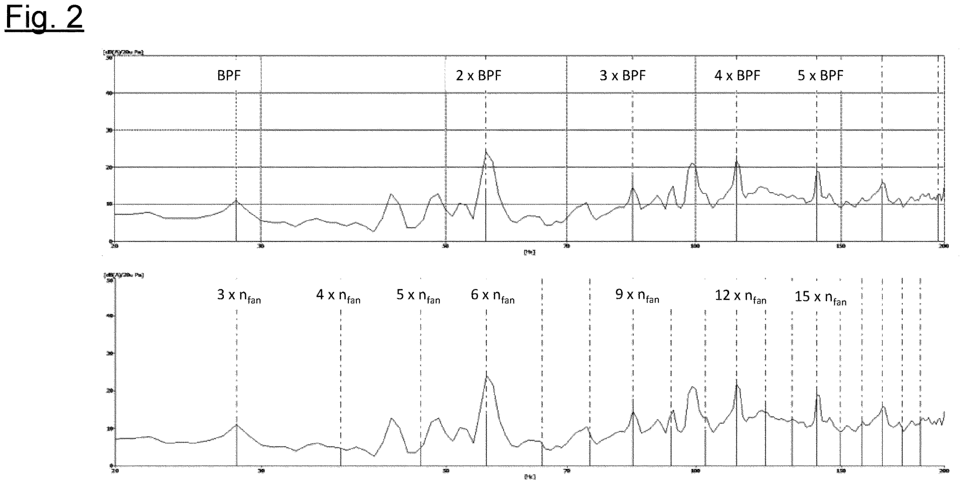

Fig. 2 zeigt die Geräuschentwicklung über einen Frequenzbereich mit Bezug zur Blattfolgefrequenz und zur Lüfterdrehzahl. In beiden Diagrammen ist dabei dieselbe Messung dargestellt, und es wurde ein Axiallüfter mit drei Schaufelblättern akustisch vermessen, der mit ca. 550 Umdrehungen pro Minute rotiert und saugseitig Luft durch den Wärmetauscher fördert. Im Diagramm ist die Lautstärke in dB und die Frequenz von 20 bis 200 Hz logarithmisch aufgetragen. Wie man sieht, treten die akustischen Spitzen nicht bei den Harmonischen der Drehzahl, sondern den Harmonischen der Blattfolgefrequenz auf. Lediglich ein Peak unterhalb 100 Hz ist auf eine Eigenschwingung des Systems zurückzuführen, alle übrigen sind Vielfache der Blattfolgefrequenz.

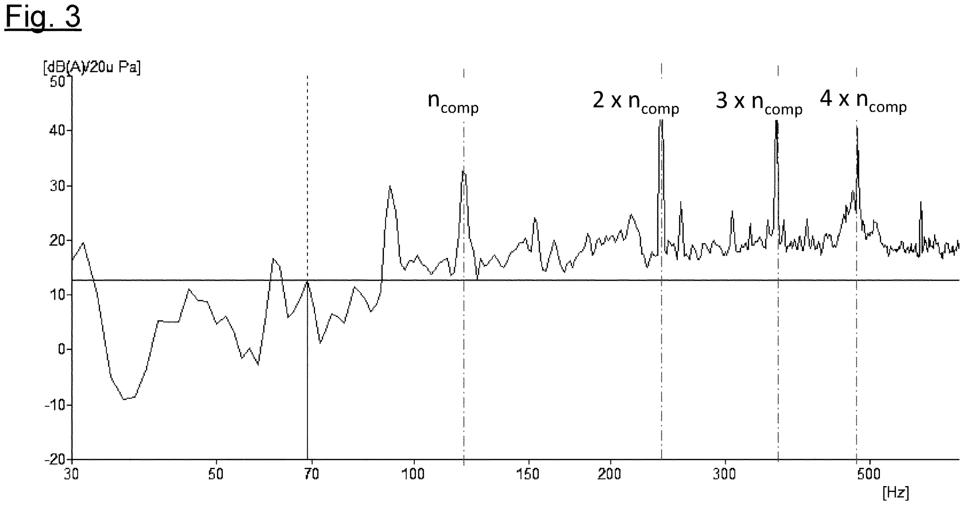

Fig. 3 zeigt die Geräuschentwicklung über einen Frequenzbereich mit Bezug zur Kompressordrehzahl. Der Kompressor rotiert dabei mit einer Drehzahl von 7200 Umdrehungen pro Minute. Im Diagramm ist die Lautstärke in dB und die Frequenz von 30 bis 500 Hz logarithmisch aufgetragen. Lediglich ein Peak unterhalb 100 Hz ist auf eine Eigenschwingung des Systems zurückzuführen, alle übrigen sind Vielfache der Drehfrequenz.

Es ist zu erkennen, dass die Maxima der Geräuschentwicklung aufgrund der Kompressordrehzahl sehr steil verlaufen, es ist daher gut möglich, mit nur kleinen Drehzahländerungen hier Abhilfe zu schaffen. Im Beispiel ist bei diesen Drehzahlkombinationen die Kombination aus der vierfachen Blattfolgefrequenz und der Drehfrequenz des Kompressors kritisch und muss erfindungsgemäß für die Regelung gesperrt werden. Dasselbe Verfahren muss auch für alle anderen Kombinationen angewendet werden, so dass sich am Ende eine Tabelle der unzulässigen Kombinationen über die Drehzahlbereiche von Lüfter und Kompressor ergibt.

### Bezugszeichenliste

- 1: Arbeitsfluidumlauf
- 2: Kältekompressor
- 3: Kondensator
- 4: Entspannungs-Regelventil
- 5: Verdampfer
- 6: verdichtetes Arbeitsfluid
- 7: Wärmeträgerstrom
- 8: Umwälzpumpe
- 9: Wärmestrom
- 10: kondensiertes Arbeitsfluid
- 11: Kältestrom
- 12: Umgebungsluft
- 13: Lüfter
- 14: erwärmtes Arbeitsfluid
- 15: Sammelbehälter
- 16: Temperaturmessstelle
- 17: Temperaturmessstelle
- 18: Druckmessstelle
- 19: Messdaten
- 20: Druckmessstelle
- 21: Temperaturmessstelle
- 22: Massenstrommessung
- 23: Regelkreis für Entspannungs-Regelventil
- 24: Temperaturmessstelle
- 25: Druckmessstelle
- 26: Temperaturmessstelle
- 27: Druckmessstelle

## Patentansprüche

1. Verfahren zur Regelung einer Wärmepumpe, in der ein linksdrehender thermodynamischer Clausius-Rankine-Kreisprozess betrieben und in welchem ein Arbeitsfluid in einem geschlossenen, hermetisch dichten Arbeitsfluidumlauf (1) geführt wird, wobei die Wärmepumpe jeweils mindestens einen drehzahlgeregelten Kompressor (2), mindestens ein elektronisch geregeltes Expansionsventil (4), mindestens einen Kondensator (3), mindestens einen Verdampfer (5) und mindestens einen drehzahlgeregelten Lüfter (13) und eine Wärmepumpenregelung aufweist, wobei Nutzwärme an einen Heizkreislauf oder Nutzkälte an mindestens einen Kühlkreislauf abgegeben wird, wobei durch die Wärmepumpenregelung sowohl die Kompressordrehzahlen als auch die Lüfterdrehzahlen erfasst werden,
**dadurch gekennzeichnet, dass**
- aus jeder Lüfterdrehzahl die Blattfolgefrequenz und ihre ganzzahligen Vielfachen gebildet wird,
- diese Blattfolgefrequenz und ihre ganzzahligen Vielfachen mit jeder Kompressordrehzahl und ihren ganzzahligen Vielfachen verglichen wird,
- und die Wärmepumpenregelung einen vorgebbaren Frequenzabstand aufweist, der die verglichenen ganzzahligen Vielfachen der Kompressordrehzahlen und die der Blattfolgefrequenz um diesen vorgebbaren Frequenzabstand voneinander entfernt geregelt hält,
- indem entweder die Drehzahl der Kompressoren oder die Drehzahlen der Lüfter oder beide durch Regeleingriff geändert werden.

2. Verfahren nach Anspruch 1, **dadurch gekennzeichnet, dass** eine Geräuschminderung des Nachts höher als die am Tag gewählt wird, indem der vorgegebene Frequenzabstand unterschiedlich gewählt wird.

3. Verfahren nach Anspruch 2, **dadurch gekennzeichnet, dass** der vorgegebene Frequenzabstand nachts mindestens 2 Prozent beträgt.

4. Verfahren nach Anspruch 3, **dadurch gekennzeichnet, dass** der vorgegebene Frequenzabstand nachts mindestens 5 Prozent beträgt.

5. Verfahren nach Anspruch 2, **dadurch gekennzeichnet, dass** der vorgegebene Frequenzabstand tags mindestens 1 Prozent beträgt.

6. Verfahren nach Anspruch 5, **dadurch gekennzeichnet, dass** der vorgegebene Frequenzabstand tags mindestens 3 Prozent beträgt.

7. Verfahren nach einem der Ansprüche 1 bis 6, **dadurch gekennzeichnet, dass** der vorgegebene Frequenzabstand dadurch hergestellt wird, dass die Lüfterdrehzahl verringert und die Kompressordrehzahl erhöht wird.

8. Verfahren nach einem der Ansprüche 1 bis 7, **dadurch gekennzeichnet, dass** die Regelung des Frequenzabstands entsprechend der Gebietskartierung des Aufstellungsortes vorgenommen wird.

## Claims

1. Method for controlling a heat pump, in which a counterclockwise rotating thermodynamic Clausius-Rankine cycle process is operated and in which a working fluid is conducted in a closed, hermetically sealed working fluid circuit (1), wherein the heat pump has at least one speed-controlled compressor (2), at least one electronically controlled expansion valve (4), at least one condenser (3), at least one evaporator (5) and at least one speed-controlled fan (13) and a heat pump control, wherein useful heat is delivered to a heating circuit or useful cooling is delivered to at least one cooling circuit, wherein both the compressor speeds and the fan speeds are detected by the heat pump control,
**characterized in that**
- the blade sequence frequency and its integer multiples are formed from each fan speed,
- this blade sequence frequency and its integer multiples are compared with each compressor speed and its integer multiples,
- and the heat pump control has a predeterminable frequency spacing which keeps the compared integer multiples of the compressor speeds and those of the blade sequence frequency controlled at a distance from one another by this predeterminable frequency spacing,
- by changing either the speed of the compressors or the speeds of the fans or both by control intervention.

2. Method according to claim 1, **characterized in that** a noise reduction at night is selected to be higher than during the day by selecting the predetermined frequency spacing to be different.

3. Method according to claim 2, **characterized in that** the predetermined frequency spacing at night is at least 2 percent.

4. Method according to claim 3, **characterized in that** the predetermined frequency spacing at night is at least 5 percent.

5. Method according to claim 2, **characterized in that** the predetermined frequency spacing during the day is at least 1 percent.

6. Method according to claim 5, **characterized in that** the predetermined frequency spacing during the day is at least 3 percent.

7. Method according to any one of claims 1 to 6, **characterized in that** the predetermined frequency spacing is produced by reducing the fan speed and increasing the compressor speed.

8. Method according to any one of claims 1 to 7, **characterized in that** the controlling of the frequency spacing is performed according to the area mapping of the installation site.

## Revendications

1. Procédé de régulation d'une pompe à chaleur dans laquelle un processus à cycle Clausius et Rankine thermodynamique orienté à gauche est exécuté et dans lequel un fluide de travail est guidé dans un circuit de fluide de travail (1) fermé hermétiquement étanche, dans lequel la pompe à chaleur présente respectivement au moins un compresseur (2) à vitesse de rotation régulée, au moins un robinet détendeur (4) à régulation électronique, au moins un condensateur (3), au moins un évaporateur (5) et au moins un ventilateur (13) à vitesse de rotation régulée et une régulation de pompe à chaleur, dans lequel de la chaleur utile est délivrée à un circuit de chauffage ou du froid utile est délivré à au moins un circuit de refroidissement, dans lequel la régulation de pompe à chaleur détecte aussi bien les régimes de compresseur que les régimes de ventilateur,
**caractérisé en ce que**
- la fréquence de répétition de pale et ses multiples entiers sont formés à partir de chaque régime de ventilateur,
- cette fréquence de répétition de pale et ses multiples entiers sont comparés à chaque régime de compresseur et à ses multiples entiers,
- et la régulation de pompe à chaleur présente un écart de fréquence prédéterminable qui maintient les multiples entiers comparés des régimes de compresseur et ceux de la fréquence de répétition de pale régulés à distance les uns des autres par cet écart de fréquence prédéterminable,
- **en ce que** soit le régime des compresseurs, soit le régime des ventilateurs, ou les deux, sont modifiés par une intervention de régulation.

2. Procédé selon la revendication 1, **caractérisé en ce qu'**une réduction de bruit nocturne supérieure à celle du bruit diurne est sélectionnée en sélectionnant différemment l'écart de fréquence prédéterminé.

3. Procédé selon la revendication 2, **caractérisé en ce que** l'écart de fréquence nocturne prédéterminé est d'au moins 2 pour cent.

4. Procédé selon la revendication 3, **caractérisé en ce que** l'écart de fréquence nocturne prédéterminé est d'au moins 5 pour cent.

5. Procédé selon la revendication 2, **caractérisé en ce que** l'écart de fréquence diurne prédéterminé est d'au moins 1 pour cent.

6. Procédé selon la revendication 5, **caractérisé en ce que** l'écart de fréquence diurne prédéterminé est d'au moins 3 pour cent.

7. Procédé selon l'une quelconque des revendications 1 à 6, **caractérisé en ce que** l'écart de fréquence prédéterminé est établi de sorte que le régime de ventilateur est réduit et le régime de compresseur est augmenté.

8. Procédé selon l'une quelconque des revendications 1 à 7, **caractérisé en ce que** la régulation de l'écart de fréquence est effectuée en fonction de la cartographie de zone du lieu d'installation.
